(19) Europäisches Patentamt
European Patent Office
Office européen des brevets

(11) **EP 2 400 356 A1**

(12) **EUROPÄISCHE PATENTANMELDUNG**

(43) Veröffentlichungstag:
**28.12.2011 Patentblatt 2011/52**

(51) Int Cl.:
***G05B 11/32*** *(2006.01)*

(21) Anmeldenummer: **10166290.6**

(22) Anmeldetag: **17.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **TransMIT GmbH**
**35394 Gießen (DE)**

(72) Erfinder: **Orlowski, Peter**
**35440 Linden (DE)**

(74) Vertreter: **Stumpf, Peter**
**Kerkrader Straße 3**
**35394 Gießen (DE)**

(54) **Regler ohne Vorgabe von Regelparametern**

(57)     Die Erfindung beschreibt einen rekursiven Regler mit einer Regelfunktion. Zur Einregelung muss nur der Sollwert vorgegeben werden. Die Vorgaben anderer Parameter ist nicht notwendig.

Fig. 7

**Beschreibung**

**[Beschreibung und Einleitung des allgemeinen Gebietes der Erfindung]**

Die vorliegende Erfindung betrifft das Gebiet der Regel- und Automatisierungstechnik. Es wird ein Regler beschrieben, der ohne Vorgaben von Reglerparametern sich selbständig auf jede Regelstrecke einstellt.

**[Stand der Technik]**

Bei normalen PID-Reglern müssen Reglerparameter und Streckenspezifische Parameter vorgegeben werden. Das hat den Nachteil, das man bei der Inbetriebnahme von neuen Anlagen eine lange Zeit braucht bis man die vorgegebenen Parameter an die Regelstrecke angepasst hat.

Weiterhin kann mit dem PID-Regler ein starkes Überschwingen auftreten. Das kann insbesondere bei Störungen zu Zuständen führen, bei denen die Regelung instabil (Überschwingen mit steigender Amplitude) wird.

In der DE3613424 wird ein Regler beschrieben, bei dem ebenfalls diese Parameter vorgegeben werden müssen, was sehr nachteilig ist. In dieser Schrift wird durch die Rekursion das Überschwingen bei einer Änderung des Sollwertes etwas reduziert.

**[Aufgabe]**

Die Aufgabe der vorliegenden Erfindung ist es, die Nachteile des Standes der Technik zu beseitigen.

**[Lösung der Aufgabe]**

Diese Aufgabe wird erfindungsgemäß gelöst durch einen Regler, der eine Rekursion und eine Regelfunktion umfasst.

Die erfindungsgemäße Rekursion bewirkt, dass der nächste Regelwert $y_{(i+1)}$ unter Berücksichtigung des derzeitigen Regelwertes $y_{(i)}$ mit der Regeldifferenz $x_d$ ermittelt wird. Gegenüber einer starren Vorgabe hat das den Vorteil, dass sich der Regler besser an Änderungen anpassen kann und ein Überschwingen reduziert wird. Die schnelle Einregelung hängt auch von dem jeweils betrachtetem Zeitintervall h ab. Es werden dabei Zeitintervalle von ca. 10 Femtosekunden bis 5 Minuten eingesetzt. Es spielt dabei die Ausleserate des Sensors, Übertragungs- und Verarbeitungsgeschwindigkeit eine Rolle, so dass sich ein bevorzugter Zeitintervall von 2 Nanosekunden (ca. 600 MHz) bis 1 Milisekunde (1 kHz) ergibt.

Der ermittelte nächste Regelwert $y_{(i+1)}$ wird durch eine Regelfunktion korrigiert. Durch den Einsatz einer entsprechenden Regelfunktion findet ein Überschwingen des Reglers statt, wobei das Überschwingen wesentlich geringer ausfällt, als bei einem vergleichbaren PID-Regler.

Als Regelfunktion sind stetige oder unstetige Funktionen einsetzbar, wobei bevorzugt eine Exponentialfunktion $x^m$ eingesetzt wird. m liegt dabei bevorzugt zwischen 0,20 bis 2,0 (0,5: Wurzelfunktion). X liegt im Bereich von 0 bis unendlich und ist damit nicht auf e beschränkt.

Überraschenderweise konnte durch die Korrektur des nächsten Regelwertes mit einer Regelfunktion auf die Vorgabe von Streckentypen, Streckenparametern, Reglerverstärkung oder Reglerzeitkonstanten verzichtet werden.

Damit wurde ein Regler geschaffen, der nur mit der Vorgabe eines Sollwertes w jede Regelstrecke einregeln kann, ohne dass Parameter über die Regelstrecke ermittelt oder vorgegeben werden.

Die Geschwindigkeit der Einregelung wird durch die Vorgabe einer Streckenverstärkung $K_S$ erhöht, wobei die Streckenverstärkung bei dem derzeitigen Regelwert $y_{(i)}$ berücksichtigt wird ($y_{(i)} \cdot K_s^z$ mit Z = -10,0 bis 10,0).

Dem Regler wird in einer weiteren Ausführungsform mit einem Integralteil versehen.

Die erfindungsgemäße Regelung kann durch folgende Gleichung beschrieben werden:

$$ y_{(i+1)} = n^g - k \cdot \left( w \cdot \left| y_{(i)} \cdot K_S^Z + h \cdot x_d \right| \right)^m . $$

Im Fall, dass ein Regler ohne Integralteil eingesetzt wird, verwendet man bevorzugt g = 2,0 , n = 0, k = -1, Z = -1 und m = 0,2 bis 0,5.

Der Regler ohne Integralteil ist besonders gut für Regelungen n-ter Ordnung mit Strecken, die Totzeiten, Dämpfungen und oder Allpassverhalten aufweisen, einsetzbar.

Im Fall, dass ein Regler mit Integralteil eingesetzt wird, verwendet man bevorzugt g = 2,0, n = w, k = 1, Z = 1 und m = 1,0.

Der Regler mit Integralteil ist besonders gut für Regelungen n-ter Ordnung mit Strecken, die PT3-Verhalten und oder Totzeiten aufweisen, einsetzbar.

In der Gleichung haben die Variablen g einen Bereich von -4,0 bis +4,0 , n einen Bereich von -w bis +w , k einen Bereich von -10,0 bis +10,0 , Z einen Bereich von -10,0 bis 10,0 , m einen Bereich von 0,1 bis 3,0.

Beim Betrieb der Reglers ergibt sich das Zeitintervall h aufgrund der Sensoren und der Verarbeitungsgeschwindigkeit.

Anschließend wird ein Sollwert vorgegeben.

In einem ersten Schritt wird aufgrund der Regeldifferenz $x_d$ und des derzeitigen Regelwertes $y_{(i)}$ der nächste Regelwert $y_{(i+1)}$ ermittelt. Sofern ein von 1 verschiedener Wert für die Steckenverstärkung $K_s$ relevant ist, wird dieser beim derzeitigen Regelwert $y_{(i)}$ mit berücksichtigt.

In einem zweiten Schritt wird der nächste Regelwert mit einer Regelfunktion korrigiert. Der korrigierte Wert wird am Regler eingestellt.

Diese Schritte werden zyklisch wiederholt.

Es wird die oben angegebene Regelfunktion eingesetzt.

Wenn ein zu starkes Überschwingen erfolgt, wird m von 0,5 z.B. auf 0,33 verändert, um eine schnellere Einregelung zu erhalten. Die Entscheidung zur Anpassung von m hängt von dem Erreichen von vorher definierten Schwellwerten ab.

Ein Regler mit diesen Funktionen wird als Baugruppe eingesetzt.

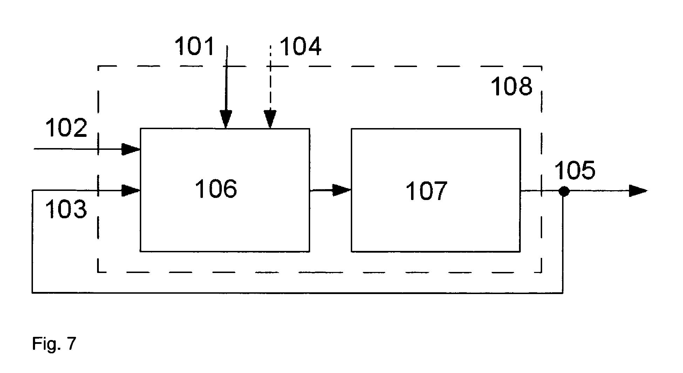

Ein erfindungsgemäßer Regler wird in digitaler Weise aufgebaut (Fig. 7) . Bei der digitalen Verarbeitung werden A/D-Wandler für den Analogteil der Regelung eingesetzt.

Die erfindungsgemäße Ausführung ist nachfolgend erläutert, wobei die Erfindung alle nachfolgend aufgeführten bevorzugten Ausführungsformen einzeln und in Kombination umfasst.

**[Ausführungsbeispiele]**

Nach Vorgabe des Sollwertes **101** wird die Regeldifferenz $x_d$ aufgrund des Signals vom Sensor **102** ermittelt. Sofern ein von 1 verschiedener Wert für die Steckenverstärkung $K_S$ 104 relevant ist, wird der derzeitigen Regelwert $y_{(i)}$ **103** mit $K_S{}^Z$ multipliziert. Nachdem die Signale im Schritt **106** parallel oder seriell aufbereitet wurden, werden diese zum zweiten Schritt **107** (Korrektur mit der Regelfunktion) im Bauteil **108** weitergeleitet. Das Signal für den korrigierten Regelwert $y_{(i+1)}$ **105** wird zur Regelstrecke geleitet und im Baustein **108** in den Schritt **106** rückgekoppelt.

Zur Regelung einer Strecke mit großer Totzeit wird ein oben beschriebener rekursiver Regler ohne Integralteil mit entsprechender Regelfunktion eingesetzt.

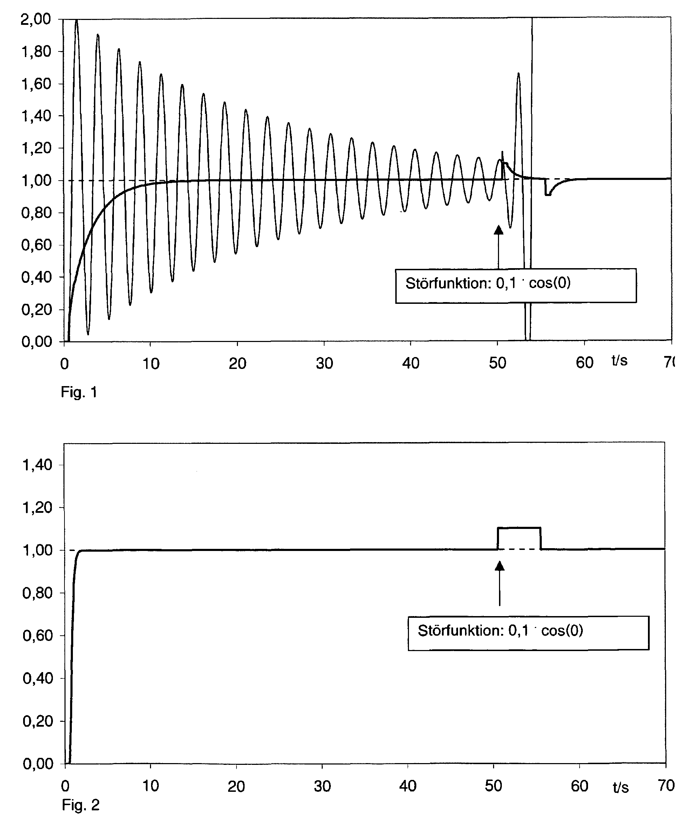

Während ein normaler PID-Regler mit starken Überschwingen reagiert, das erst nach manueller Anpassung der Parameter korrigiert werden kann (Fig. 1) kann der erfindungsgemäße Regler ohne besonders Überschwingen sich selbstständig ohne weitere Parametervorgaben schnell einregeln (Fig. 2).

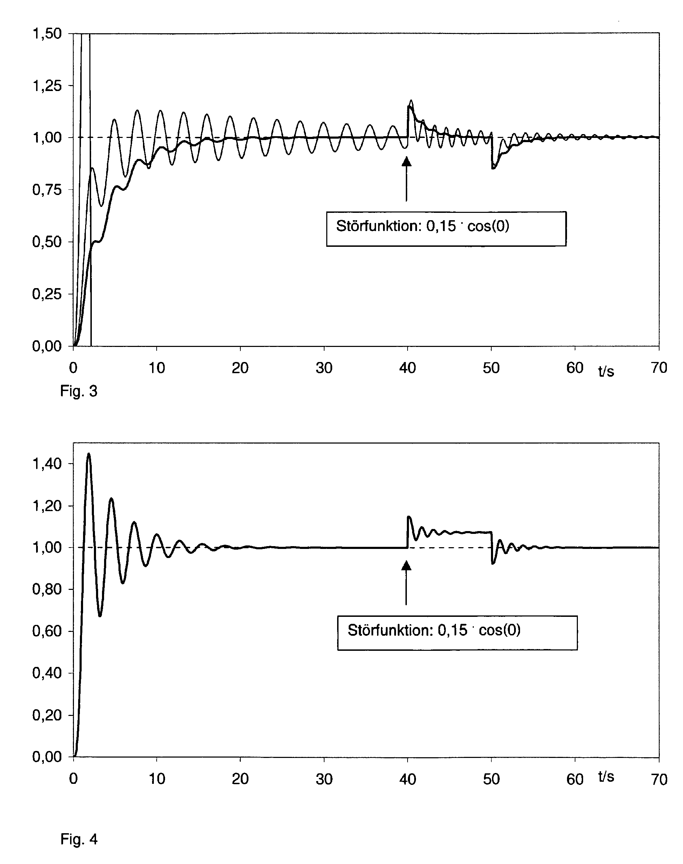

Auch bei einer Regelung einer schwach gedämpften Stecke treten beim normalen PID-Regler starke Überschwingungen auf, die erst nach mehrmaligen Anpassen der Parameter zur Einregelung führen (Fig. 3).

Beim erfindungsgemäßen Regler treten ebenfalls Überschwingungen auf, jedoch ist hier eine selbstständige Einregelung ohne weitere Parametervorgaben nach kurzer Zeit möglich (Fig. 4).

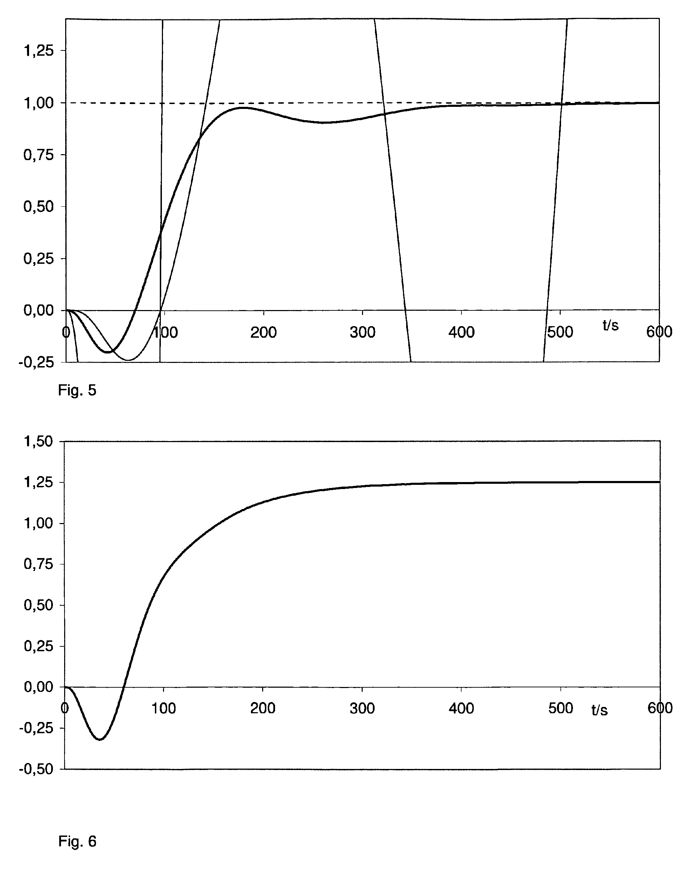

Wenn eine Strecke mit Allpassverhalten vorliegt, ist ein PID-Regler nicht mehr einsetzbar. Es wird daher auf einen FRa-Regler zurückgegriffen. Es ist auch beim FRa-Regler im selben Maße eine Anpassung der Parameter wie beim PID-Regler notwendig (Fig. 5). Beim erfindungsgemäßen Regler ist auch beim vorliegen dieser Strecke eine selbstständige Einregelung ohne weitere Parametervorgaben nach kurzer Zeit möglich (Fig. 6).

**[Abbildungslegenden und Bezugszeichenliste]**

Fig. 1 Strecke mit großer Totzeit mit PID-Regler
Fig. 2 Strecke mit großer Totzeit mit erfingungsgemäßer Regler
Fig. 3 schwach gedämpften Stecke mit PID-Regler
Fig. 4 schwach gedämpften Stecke mit erfingungsgemäßer Regler
Fig. 5 Strecke mit Allpassverhalten mit FRa-Regler
Fig. 6 Strecke mit Allpassverhalten mit erfingungsgemäßer Regler
Fig. 7 schematischer Schaltplan eines erfindungsgemäßen Reglers

**Patentansprüche**

1. Einen Regler **dadurch gekennzeichnet, dass** dieser Mittel zur selbständigen Einregelung aufweist.

2. Einen Regler nach Anspruch 1 **dadurch gekennzeichnet, dass** die Mittel zur selbständigen Einregelung mindestens eine Regelfunktion umfassen.

3. Einen Regler nach Ansprüchen 1 bis 2 **dadurch gekennzeichnet, dass** die Regelfunktion stetige und unstetige Funktionen, bevorzugt eine Exponentialfunktion besonders bevorzugt eine Wurzelfunktion umfasst.

4. Einen Regler nach Ansprüchen 1 bis 3 **dadurch gekennzeichnet, dass** die Mittel zur selbständigen Einregelung eine Rekursion umfassen.

5. Eine Baugruppe aufweisend einen Regler mit Mitteln zur selbständigen Einregelung gemäß einem der vorangehenden Ansprüche.

6. Verfahren für einen Regler **dadurch gekennzeichnet, dass** nach Vorgabe eines Sollwertes mindestens folgende Schritte umfasst sind:

    - ein nächster Regelwert wird aufgrund der Regeldifferenz und des derzeitigen Regelwertes ermittelt,
    - der nächste Regelwert mit einer Regelfunktion korrigiert wird.

7. Verfahren für einen Regler nach Anspruch 6 **dadurch gekennzeichnet, dass** die Schritte zyklisch wiederholt werden.

**8.** Verfahren für einen Regler nach Ansprüchen 6 bis 7 **dadurch gekennzeichnet, dass** die Regelfunktion stetige und unstetige Funktionen, bevorzugt eine Exponentialfunktion besonders bevorzugt eine Wurzelfunktion umfasst.

**9.** Verwendung des Reglers in Regelkreisen beim Einsatz in der Automatisierungstechnik.

Fig. 1

Störfunktion: 0,1 · cos(0)

Fig. 2

Störfunktion: 0,1 · cos(0)

Fig. 3

Fig. 4

Fig. 5

Fig. 6

Fig. 7

Europäisches Patentamt

European Patent Office

Office européen des brevets

**EUROPÄISCHER RECHERCHENBERICHT**

Nummer der Anmeldung

EP 10 16 6290

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "Excerpt ED - Orlowski P F", 1. Januar 2009 (2009-01-01), PRAKTISCHE REGELTECHNIK. ANWENDUNGSORIENTIERTE EINFÜHRUNG FÜR MASCHINENBAUER UND ELEKTROTECHNIKER (8. BEARBEITETE AUFLAGE), SPRINGER, PAGE(S) 380 - 399,482, XP009141386, ISBN: 978-3-642-01735-3 * Seiten 393,395 * ----- | 1-9 | INV. G05B11/32 |
| X | ORLOWSKI, PETER F.: "Regeln ohne Reglerparameter: Die FRt-Wurzelrekursion", MSR MAGAZIN, Bd. 5, Mai 2000 (2000-05), Seiten 60-62, XP009140448, * Seiten 60-62 * ----- | 1-9 | |
| X | ORLOWSKI, PETER F.: "Über die Wurzel in aller Natur", FH Gießen-Friedberg FB MMEW , 1. Februar 2001 (2001-02-01), Seite 14PP, XP002610370, Gefunden im Internet: URL:http://www.mmew.fh-giessen.de/personen /professoren/orlowski/Wurzel-in-aller-Natu r.pdf [gefunden am 2010-10-22] * Seite 12 * ----- | 1-9 | RECHERCHIERTE SACHGEBIETE (IPC) G05B |

Der vorliegende Recherchenbericht wurde für alle Patentansprüche erstellt

| Recherchenort | Abschlußdatum der Recherche | Prüfer |
|---|---|---|
| München | 22. November 2010 | Dörre, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

**In der Beschreibung aufgeführte Patentdokumente**

- DE 3613424